# EUROPÄISCHE PATENTSCHRIFT

(11) **EP 1 013 198 B1**
(45) Veröffentlichungstag und Bekanntmachung des Hinweises auf die Patenterteilung: **25.02.2004**
(21) Anmeldenummer: 99123420.4
(22) Anmeldetag: 24.11.1999
(51) Int. Cl.: A47C 1/032, A47D 1/00, A61G 5/00, B62B 7/00

(54) **Sitz für einen Schiebewagen, Stuhl oder dergleichen**
Seat for a trolley, chair or the like
Siège pour un chariot, chaise ou similaire

(30) Priorität: 24.11.1998 DE 19854244; 27.01.1999 DE 19903134
(43) Veröffentlichungstag der Anmeldung: 28.06.2000
(73) Patentinhaber: Thomas Hilfen HILBEG GmbH & Co. Kommanditgesellschaft, 27432 Bremervörde (DE)
(72) Erfinder: Jansen, Klaus, Dr., 21614 Buxtehude (DE)
(74) Vertreter: Möller, Friedrich, Dipl.-Ing.

(56) Entgegenhaltungen:
- DE-A- 3 939 657
- FR-A- 2 553 985

## Beschreibung

Die Erfindung betrifft einen Sitz für insbesondere einen Schiebewagen, Stuhl oder dergleichen gemäß dem Oberbegriff des Anspruchs 1, ein derartiger Sitz ist bereits aus DE-A-3 939 657 bekannt.

Der hier angesprochene Sitz kann bei Schiebewagen, das heißt Kinderwagen, insbesondere sogenannte Sportwagen, als auch Wagen für Behinderte, insbesondere behinderte Kinder oder Jugendliche, oder Stühlen zum Einsatz kommen. Vorzugsweise ist der Sitz zusammenklappbar, damit er bei Nichtgebrauch (beispielsweise in einem Auto) platzsparend verstaut werden kann.

Bekannte Sitze der eingangs genannten Art verfügen über eine verschwenkbare Rückenlehne. Die Rückenlehne kann von einer aufrechten oder nahezu aufrechten Position, bei der die Kinder oder Behinderten eine aufrechte Sitzposition einnehmen, in eine ganz oder nahezu horizontale Position verschwenkt werden, in der die Kinder oder Jugendlichen liegen können. Vor allem dann, wenn der Sitz schwerbehinderte Jugendliche aufnimmt, führt das Gewicht derselben beim Verstellen der Rückenlehne von einer Liegeposition in die Sitzposition zu einer merklichen Schwerpunktverlagerung der Person im Sitz gegenüber dem Fahrgestell eines Schiebewagens, einem Stuhl oder dergleichen. Aus dieser Schwerpunktverlagerung resultiert die Gefahr eines Umkippens des Schiebewagens, Stuhls oder dergleichen.

Ausgehend vom Vorstehenden liegt der Erfindung die Aufgabe zugrunde, einen Sitz für insbesondere Kinder und/oder Behinderte zu schaffen, bei dem die Gefahr des Umkippens des mit dem Sitz versehenen Schiebewagens oder Stuhl beseitigt ist.

Ein Sitz zur Lösung dieser Aufgabe weist die Merkmale des Anspruchs 1 auf. Dadurch, daß beim Verschwenken der Rückenlehne des Sitzes die Position der Sitzfläche verändert wird, kann eine Verlagerung des Schwerpunkts der Person im Schiebewagen, die durch das Verschwenken der Rückenlehne entsteht, kompensiert werden. Eine zu einem Umkippen des Schiebewagens, Stuhls oder dergleichen führende Schwerpunktverlagerung findet demzufolge nicht oder nur in unwesentlichem Maße statt.

Vorzugsweise ist der Sitz so ausgebildet, daß durch ein Verschwenken der Rückenlehne die Sitzfläche und insbesondere auch die Rückenlehne längs einer bevorzugt geradlinigen Bahn gegenüber einem Fahrgestell des Schiebewagens oder einem Stuhlgestell, wie z.B. einem Traggestell verschieblich sind. Auf diese Weise wird praktisch der gesamte Sitz gegenüber dem Traggestell verschoben, wenn durch Verschwenken der Rückenlehne die im Sitz sitzende Person aus einer Liegeposition aufgerichtet wird oder umgekehrt. Die jeweilige Person wird dadurch mit dem Sitz so verschoben, daß sich der Schwerpunkt der Person stets in einer solchen Position gegenüber dem Fahrgestell, Stuhlgestell oder dergleichen befindet, daß diese nicht umkippen können.

Gemäß einer bevorzugten Ausgestaltung der Erfindung ist der Sitz, und zwar insbesondere mit der Sitzfläche, an vorzugsweise zwei parallelen Führungsorganen verschieblich gelagert. Die Führungsorgane bilden vorzugsweise etwa horizontal verlaufende Führungsbahnen. Sie können aber auch zur Fußseite der im Sitz sitzenden Person leicht abfallen, wodurch ein Aufrichten der Person durch ein Hochklappen der Rückenlehne erleichtert wird.

Es ist weiterhin vorgesehen, die Rückenlehne verschwenkbar mit der Sitzfläche zu verbinden. Das geschieht vorzugsweise durch zwei Kipplager, die gegenüberliegenden Seiten mindestens einem Teil der Sitzfläche insbesondere fest zugeordnet sind. An den Kipplagern ist die Rückenlehne verschwenkbar angelenkt, und zwar durch Schwenkpunkte, wobei die Schwenkpunkte der beiden voneinander beabstandeten Kipplager auf einer gemeinsamen, gedachten Schwenkachse liegen, die horizontal gerichtet quer zur Bewegungsrichtung beispielsweise des Schiebewagens verläuft. Die verschwenkbare Anlenkung der Rückenlehne an der Sitzfläche ermöglicht es, den gesamten Sitz, vorzugsweise aber nur mindestens einen Teil der Sitzfläche, gegenüber dem Traggestell zu verschieben. Dazu sind die Kipplager verschieblich in oder an den Führungsorganen gelagert.

Gemäß einer vorteilhaften Ausgestaltung der Erfindung sind die Führungsorgane durch Sockelteile bzw. Führungsbahnen gebildet, wobei die Sockelteile auf den Führungsbahnen längsverschieblich sind. Vorzugsweise sind dazu die Sockel teile als hülsenartige Führungen ausgebildet, die die Führungsbahnen umgeben. Die Sockelteile haben darüber hinaus weitere Funktionen: Zum einen dienen sie dazu, unter Zuhilfenahme entsprechender Kupplungsmittel den Sitz und die Führungsbahnen am Traggestell, z.B. einem Fahrgestell des Schiebewagens, zu befestigen. Dies geschieht gemäß einem weiteren Erfindungsgedanken, für den ein selbständiger Schutz beansprucht wird, wodurch der Sitz mit den Führungsbahnen und Sockelteilen vom Traggestell getrennt werden kann. Zum anderen dienen die Sockelteile dazu, den Abstand einer an den Führungsbahnen befestigten Fußstütze gegenüber der Rückenlehne zu verändern zur Anpassung der Sitztiefe an unterschiedlich große Kinder oder Jugendliche.

Die Führungsbahnen können aus vorzugsweise geradelinigen Führungsstangen gebildet sein. Diese Führungsstangen sind zweckmäßigerweise in allen Richtungen starr. Darüber hinaus ist es auch denkbar, die Führungsbahnen aus in einer Richtung biegsamen bzw. elastischen Ketten oder Profilen zu bilden. Die starren Eigenschaften der Ketten oder Profile reichen aus, um den Sitz, insbesondere mindestens einen Teil der Sitzfläche, definiert verschiebbar zu führen. In einer anderen Richtung, die vorzugsweise senkrecht zur Richtung verläuft, in der die Ketten oder Profile starr sind, sind die Ketten oder Profile elastisch bzw. flexibel. Auf diese Weise ist es möglich, die Führungsbahnen verhältnismäßig kurz zu halten, weil derjenige Teil derselben, der zur Führung des Sitzes momentan nicht benötigt wird, aus der eigentlichen Führungsbahn herausbewegt sein kann.

Gemäß einer bevorzugten Ausgestaltung des erfindungsgemäßen Sitzes ist die Rückenlehne mit mindestens einem Sockelteil über ein Koppelglied verbunden. Vorzugsweise ist wenigstens ein Koppelglied zwischen der Rückenlehne und jedem Sockelteil vorgesehen. Das jeweilige Koppelglied ist mit Abstand vom Schwenkpunkt des entsprechenden Kipplagers zur Verbindung der Rückenlehnen mit der Sitzfläche angelenkt. Dadurch wird erreicht, daß beim Verschwenken der Rückenlehne um die Drehpunkte an den Kipplagern die sich an den Sockelteilen abstützenden Koppelglieder die Kipplager mit den Schwenkpunkten verschieben, und die Sitzfläche gegenüber dem Fahrgestell oder einem sonstigen Traggestell in ihrer Position verändert wird. Wegen der Anlenkung der Rückenlehne an der Sitzfläche macht die Rückenlehne die Positionsveränderung der Sitzfläche oder eines Teils derselben mit. Diese Bewegung ist allerdings mit der Kippbewegung der Rückenlehne überlagert, wodurch eine Relativbewegung zwischen der Rückenlehne einerseits und der Sitzfläche andererseits herbeigeführt wird. Diese Veränderung der Position der Rückenlehne und der Sitzfläche führt dazu, daß der Sitz, und zwar im wesentlichen nur die Sitzfläche oder wenigstens ein Teil derselben, eine veränderte Position einnimmt, so daß der Schwerpunkt der im Sitz sitzenden oder liegenden Person gegenüber dem Traggestell sich in horizontaler Richtung nicht oder nicht nennenswert ändert und dadurch vermieden wird, daß beim Verschwenken der Rückenlehne und die sich dadurch ändernde Position der im Sitz sitzenden oder liegenden Person die Gefahr des Kippens des Schiebewagens, Stuhls oder dergleichen nicht besteht.

Gemäß einer bevorzugten Ausgestaltung der Erfindung ist das oder jedes Koppelglied derart an der Rückenlehne und das betreffende Sockelteil angelenkt, daß beim Zusammenklappen des Sitzes, also das Anschwenken der Rückenlehne an die Sitzfläche, das jeweilige Koppelglied die durch die Drehpunkte der Kipplager verlaufende (gedachte) Drehachse senkrecht schneidet. Dadurch wird erreicht, daß beim anfänglichen Anklappen der Rückenlehne an die Sitzfläche der Sitz in die eine Richtung bewegt wird und beim vollständigen Anklappen der Rückenlehne an die Sitzfläche in die entgegengesetzte Richtung zurückbewegt wird. Die Folge ist, daß der zusammengeklappte Sitz besonders wenig Platz einnimmt.

Ein bevorzugtes Ausführungsbeispiel des erfindungsgemäßen Sitzes wird nachfolgend anhand der Zeichnung näher erläutert. In dieser zeigen:

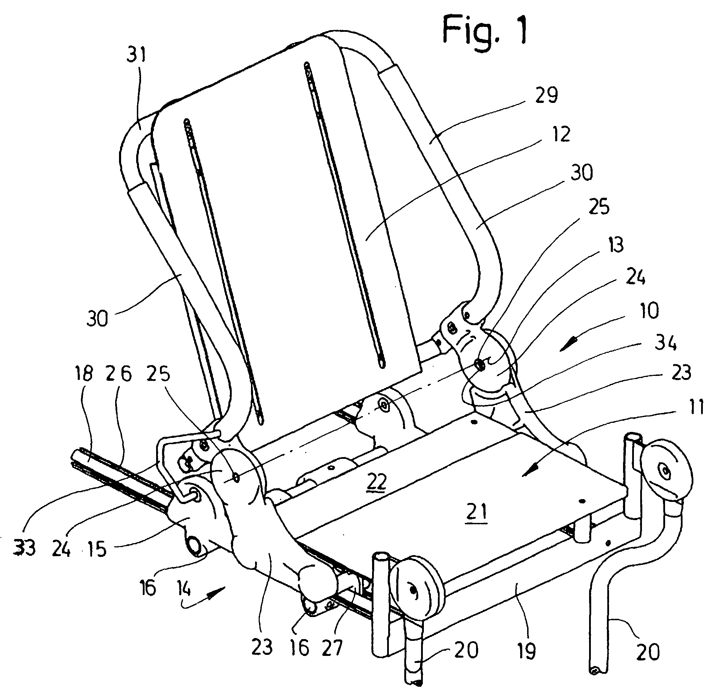

- Fig. 1: eine perspektivische Ansicht des Sitzes schräg von vorn,

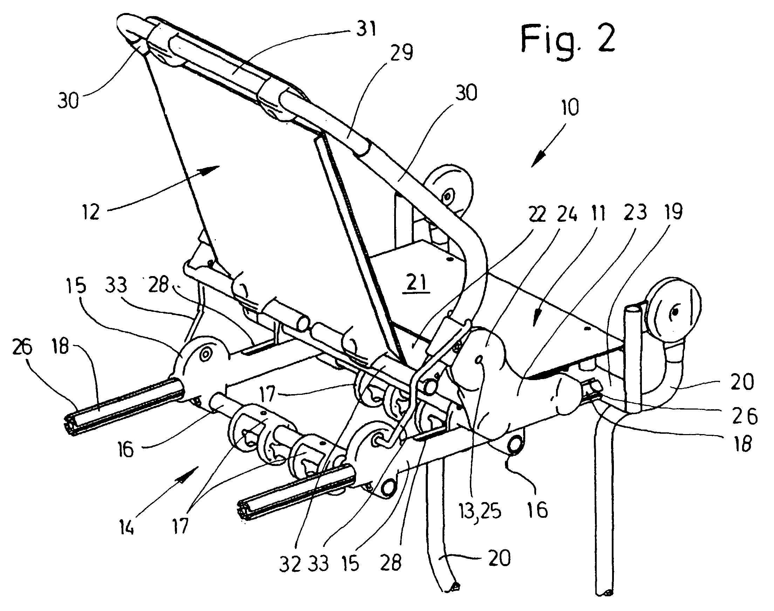

- Fig. 2: eine perspektivische Ansicht des Sitzes der Fig. 1 schräg von hinten,
- Fig. 3: einen (vergrößerten) Schnitt III-III durch eine Führungsstange des Sitzes der Fig. 1 und 2,
- Fig. 4: eine Seitenansicht des Sitzes mit einer in eine Sitzposition hochgeschwenkten Rückenlehne,
- Fig. 5: einen Sitz in einer Ansicht gemäß der Fig. 4 mit verstellter Fußstütze,
- Fig. 6: den Sitz in einer Liegeposition mit heruntergeklappter Rückenlehne in einer Ansicht analog zur Fig. 4, und
- Fig. 7: den Sitz in zusammengeklapptem Zustand in einer Ansicht gemäß den Fig. 4 bis 6.

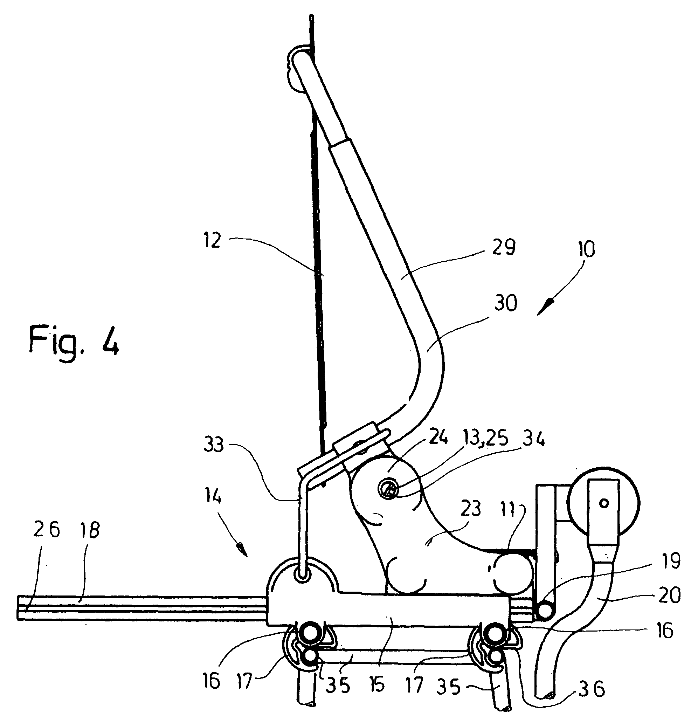

Beim in den Figuren gezeigten Sitz 10 der Erfindung kann es sich um einen solchen für einen Schiebewagen, insbesondere einen Kinderwagen, einen Sportwagen oder einen Transportwagen für behinderte Kinder oder Jugendliche, oder für einen Stuhl, z.B. einen Kinderhochstuhl, oder dergleichen handeln. Der Sitz 10 ist lösbar auf einem nur in der Fig. 4 teilweise gezeigten Fahrgestell 35 von z.B. einem Kinderwagen befestigt.

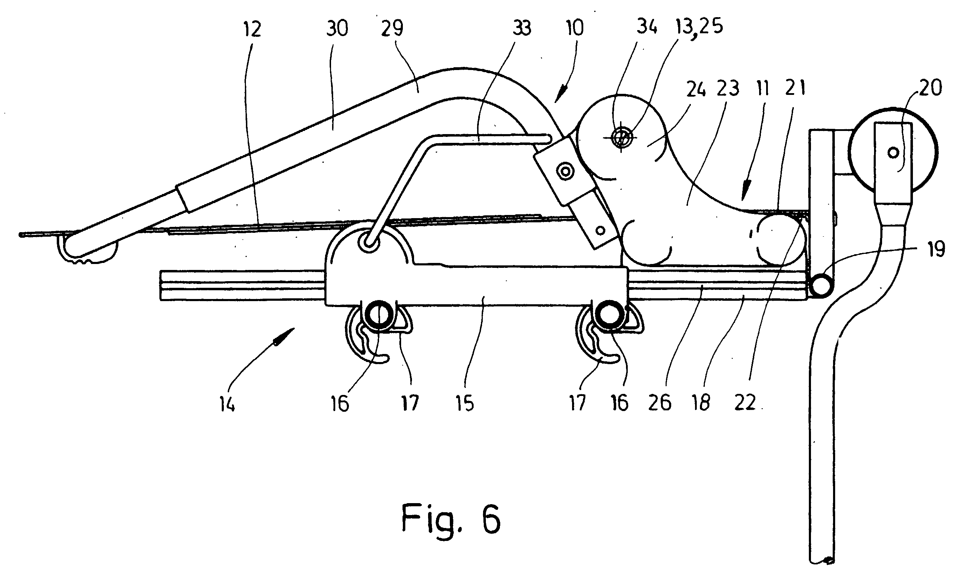

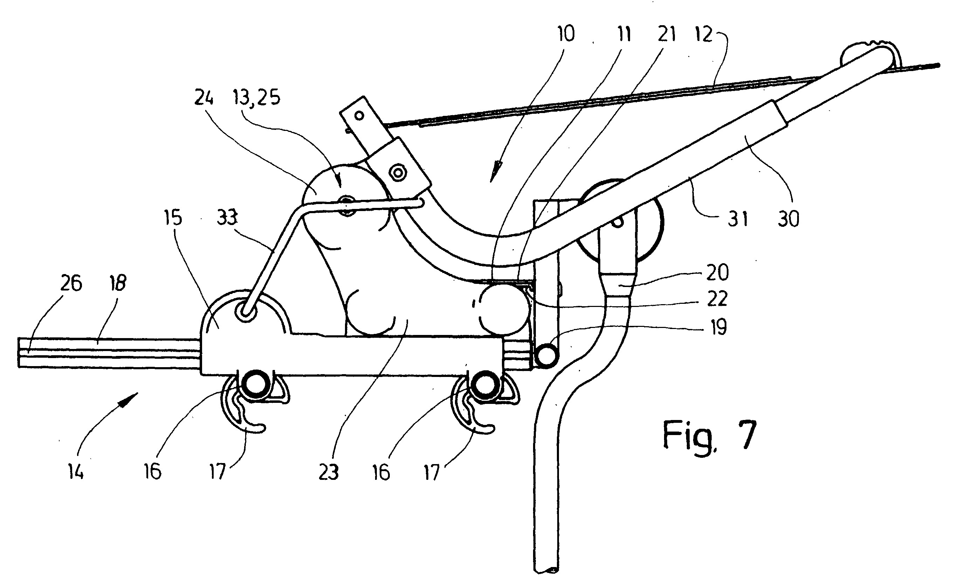

Der Sitz 10 verfügt über eine etwa horizontale, mehrteilige Sitzfläche 11 und eine Rückenlehne 12. Die Rückenlehne 12 ist schwenkbar um eine horizontale Schwenkachse 13 mit der Sitzfläche 11 verbunden. Die Rückenlehne, 12 kann gegenüber der Sitzfläche 11 so weit verschwenkt werden, daß sie ausgehend von einer leicht schrägen Sitzposition (Fig. 4) sowohl in eine etwa horizontale Liegeposition (Fig. 6), in der die Sitzfläche 11 und die Rückenlehne 12 etwa eine durchgehende Liegefläche bilden, als auch eine gegen die Sitzfläche 11 geklappte Transportposition (Fig. 7) gelangt.

Der Sitz 10 weist zusätzlich einen Unterbau 14 auf. Dieser Unterbau 14 weist auf gegenüberliegenden Längsseiten des Sitzes 10 angeordnete Sockelteile 15 auf, die hülsenartig ausgebildet sind. Die Sockelteile 15 sind parallel zueinander verlaufend mit geringfügigem Abstand unter der Sitzfläche 11 angeordnet und verlaufen wie die Sitzfläche 11 etwa horizontal. Die beiden parallelen Sockelteile 15 auf gegenüberliegenden Seiten der Sitzfläche 11 sind sowohl in ihren vorderen als auch in ihren hinteren Endbereichen verbunden durch Querholme 16. Die Querholme 16 sind an gegenüberliegenden Enden der Sockelteile 15 befestigt und verlaufen mit Abstand parallel zueinander.

Jedem Querholm 16 sind zwei Rastklauen 17 zugeordnet, die zur lösbaren, nämlich rastenden, Verbindung des Sitzes 10 mit dem in der Fig. 6 andeutungsweise, nämlich einem oberen Abschnitt, dargestellten Fahrgestell 35 dienen. Damit ist der Sitz 10 an das Oberteil des Fahrgestells 35 ankuppelbar. Der Sitz 10 lässt sich vom Fahrgestell 35 ebenso abkuppeln, um ihn woanders einzusetzen, beispielsweise ihn an ein Stuhlgestell anzukuppeln, wozu wiederum die Rastklauen 17 dienen. Diese lösbare Verbindung des Sitzes 10 mit unterschiedlichen Traggestellen betrifft einen eigenständigen Erfindungsgedanken. Es handelt sich hierbei auch um eine vorteilhafte Weiterbildung des Sitzes 10.

Die Rastklauen 17 sind über die Querholme 16 unter den Sockelteilen 15 mit den Sockelteilen verbunden. Die Rastklauen 17 sind außermittig auf den Querholmen 16 gelagert. Jede der gleich ausgebildeten Rastklauen 17 ist mit einem einseitig offenen, leicht länglichen Rastmaul 36 versehen. Die Rastmäuler 36 sind so ausgebildet, dass sie von der offenen Seite her rastend auf parallel unterhalb der Querholme 16 des Unterbaus 14 des Sitzes 10 verlaufende Querholme des Fahrgestells 35 oder eines sonstigen Traggestells aufschiebbar sind.

An der Stelle der beschriebenen Rastklauen 17 können auch andere Kupplungsorgane zur lösbaren Verbindung des Sitzes 10 mit einem Traggestell, insbesondere Fahrgestell 35, Verwendung finden.

Jedem der gleich ausgebildeten, hülsenähnlichen Sockelteile 15 ist eine Führungsstange 18 zugeordnet. Die Sockelteile 15 bilden Führungsorgane der Führungsstangen 18. Die in gegenüberliegenden, längsgerichteten Randbereichen unter dem Sitz 10 verlaufenden Führungsstangen 18 sind verschiebbar in den hülsenähnlichen Sockelteilen 15 gelagert.

Die in Blickrichtung der Person im Sitz 10 (Sitzlängsrichtung) vornliegenden, nämlich der Vorderseite des Sitzes 10 zugeordneten Enden beider Führungsstangen 18 sind durch eine Quertraverse 19 miteinander verbunden. Diese somit senkrecht zur Längsachse der Führungsstangen 18 verlaufende Quertraverse 19 dient zur Befestigung einer schwenkbaren Fußstütze 20 am Unterbau 14. Außerdem ist im gezeigten Ausführungsbeispiel an der Quertraverse 19 ein Vorderteil 21 der zweiteilig ausgebildeten Sitzfläche 11 befestigt.

Ein zweites Teil der Sitzfläche 11, nämlich ein Hinterteil 22, ist an gegenüberliegenden Seiten mit jeweils einem Kipplager 23 verbunden. Über die gleich ausgebildeten Kipplager 23 ist die Rückenlehne 12 schwenkbar mit der Sitzfläche 11 verbunden. Dazu bildet jedes Kipplager 23 ein Drehgelenk 24 zwischen der Rückenlehne 12 und der Sitzfläche 11 bzw. dem Hinterteil 22 der Sitzfläche 11. Jedes Drehgelenk 24 weist einen Drehpunkt 25 auf, wobei die Drehpunkte 25 beider Drehgelenke 24 der Kipplager 23 auf gegenüberliegenden Seiten der horizontalen und quer zu den Führungsstangen 18 verlaufenden Schwenkachse 13 liegen.

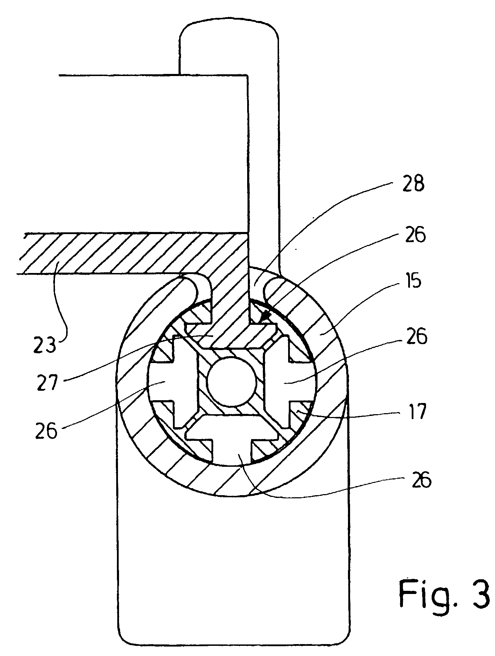

Die beiden Kipplager 23 sind sowohl zu den Sockelteilen 15 als auch zu den Führungsstangen 18 längs verschiebbar, und zwar in Fahrtrichtung und gegen die Fahrtrichtung von z.B. einem den Sitz 10 tragenden Schiebewagen. Geführt sind dabei die Kipplager 23 in entsprechenden Führungen der Führungsstangen 18. Bei den hier gezeigten Führungsstangen 18 sind die Führungen durch in Längsrichtung der Führungsstangen 18 verlaufende T-förmige Nuten 26 gebildet. Im gezeigten Ausführungsbeispiel (Fig. 3) weist jede Führungsstange 18 vier gleichmäßige im Umfang verteilte, gleiche Nuten 26 auf. In nur einer Nut 26 jeder Führungsstange 18 ist das entsprechende Kipplager 23 durch einen korrespondierend ausgebildeten Führungssteg 27 am Kipplager 23 verschiebbar. Die übrigen Nuten 26 in den Führungsstangen 18 sind nicht belegt. Deswegen reicht es aus, wenn jede Führungsstange 18 nur eine einzige Nut 26 aufweist. Auch können die Führungsstangen 18 beliebige Querschnitte aufweisen, so daß die Erfindung nicht auf die gezeigte Ausbildung (Fig. 3) der Führungsstangen 18 beschränkt ist.

Durch die längsverschiebliche Führung der Führungsstege 27 der Kipplager 23 in den in Längsrichtung der Führungsstangen 18 verlaufenden Nuten 26 können die Kipplager 23 entlang der Führungsstangen 18 verschoben werden. Durch die Verbindung der Kipplager 23 mit dem Hinterteil 22 der Sitzfläche 11 wird bei einer Verschiebung der Kipplager 23 der durch das Hinterteil 22 gebildete Teil der Sitzfläche 11 in Längsrichtung des Sitzes 10 hin- oder hergeschoben. Dabei erfolgt eine Mitnahme der an den Kipplagern 23 um die Schwenkachse 13 schwenkbar verbundenen Rückenlehne 12.

Jedes Sockelteil 15 ist mit einem Längsschlitz 28 versehen. Durch die Längsschlitze 28 sind die Führungsstege 27 unter den Kipplagern 23 hindurchgeführt. Die Längsschlitze 28 sind derart bemessen, daß sich die Kipplager 23 längs zu den Sockelteilen 15 bewegen können. Dadurch wird gewährleistet, daß bei einem Verkippen der Rückenlehne 12 des Sitzes 10 die Kipplager 23 sich ungehindert gegenüber den Sockelteilen 15 verschieben lassen.

Die beiden Teile der Sitzfläche 11 sind lösbar miteinander verbunden durch in den Figuren nicht gezeigte Arretierungsorgane. Ist die Verbindung des Vorderteils 21 mit dem Hinterteil 22 gelöst, kann die Fußstütze 20 mit dem Vorderteil 21 gegenüber dem übrigen Sitz 10 vorgezogen oder zurückgeschoben werden. Dabei erfolgt eine Mitnahme der Führungsstangen 18, die soweit in den hülsenähnlichen Sockelteilen 15 verschoben werden. Durch die Gleitführung der Kipplager 23 mit dem dazwischen befestigten Hinterteil 22 der Sitzfläche 11 an den Führungsstangen 18 verändert sich beim Verstellen der Fußstütze 20 die Position der Kipplager 23 zu den Sockelteilen 15 nicht. Es kann so eine Verstellung der Fußstütze 20 relativ zum Sitz 10 mit Ausnahme des an der Quertraverse 19 befestigten Vorderteils 21 der Sitzfläche 11 erfolgen.

Alternativ ist es denkbar, die Kipplager 23 längsverschieblich an den Sockelteilen 15 zu lagern. Eine Schiebeverbindung und Führung der Kipplager 23 an den Führungsstangen 18 kann dadurch entfallen.

Die Rückenlehne 12 ist an den Kipplagern 23 durch Arretierungsschrauben 34 arretierbar. Durch Festziehen der sich durch die Drehpunkte 25 der Kipplager 23 erstreckenden Arretierungsschrauben 34 wird die Rückenlehne 12 in ihrer jeweiligen Position gesichert, ist also nicht mehr verkippbar.

Die Rückenlehne 12 ist von einem Rahmen 29 umgeben, der zwei abgewinkelte, rohrförmige Seitenteile 30 aufweist. Die Seitenteile 30 weisen an ihren gegenüberliegenden Endbereichen angeformte bzw. separate Querrohre 31 und 32 auf. An den horizontalen und mit Abstand parallel quer zur Längsrichtung des Sitzes 10 verlaufenden Querrohren 31 und 32 ist die Rückenlehnenfläche des Sitzes 10 befestigt.

Die Rückenlehne 12 ist über die Seitenteile 30 des Rahmens 29 einerseits über die Drehpunkte 25 mit den Kipplagern 23 an gegenüberliegenden Seitenteile der Sitzfläche 11 und andererseits über zwei Koppelglieder, die im gezeigten Ausführungsbeispiel als Koppelstangen 33 ausgebildet sind, mit den Sockelteilen 15 verbunden. Jede der gleich ausgebildeten Koppelstangen 33 ist an einem Ende mit Abstand vom jeweiligen Drehpunkt 25 drehbar mit dem Seitenteil 30 des Rahmens 29 verbunden. Das andere Ende jeder Koppelstange 33 ist ebenfalls drehbar mit jeweils einem Sockelteil 15 verbunden.

Durch die Koppelstangen 33 wird der Abstand der Anlenkpunkte derselben am Rahmen 29 der Rückenlehne 12 gegenüber den Anlenkpunkten an den Sockelteilen 15 beim Verschwenken der Rückenlehne 12 konstant gehalten. Das hat durch den Abstand der Drehpunkte 25 von den Anlenkpunkten der Koppelstangen 33 am Rahmen 29 zur Folge, daß beim Verschwenken der Rückenlehne 12 der Sitz 10, die Kipplager 23 und die Führungsstangen 18 gegenüber den Sockelteilen 15 verschoben werden.

Im folgenden wird unter Bezugnahme auf die Fig. 4 bis 7 die Verstellung des Sitzes 10 näher erläutert:

Die Fig. 4 zeigt den Sitz 10 bei senkrecht hochgeklappter Rückenlehne 12 und vollständig eingeschobener Fußstütze 20. Die Sitzfläche 11 ist dadurch weitestmöglich verkürzt, indem das Vorderteil 21 und das Hinterteil 22 der Sitzfläche 11 sich größtenteils überlappen.

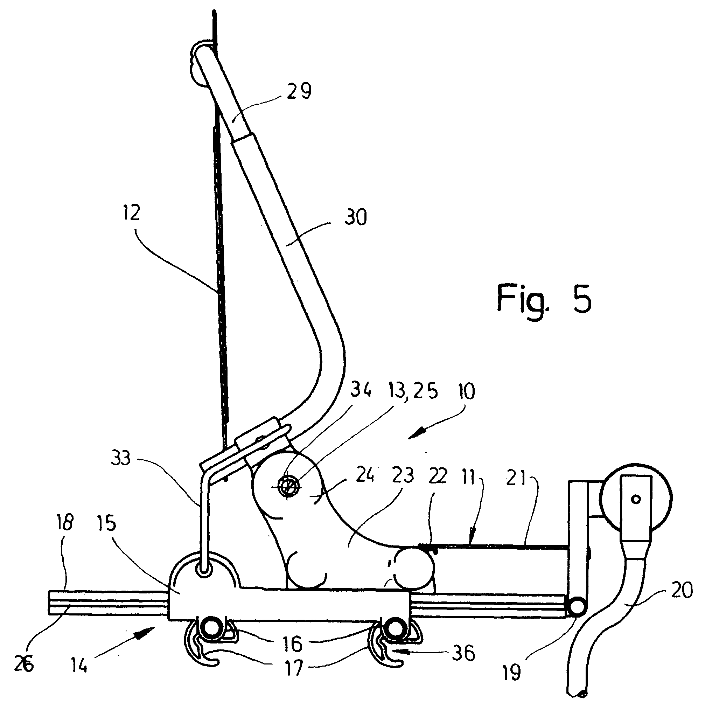

Die Fig. 5 zeigt den Sitz 10 bei maximal herausgezogener Fußstütze 20. Die Sitzfläche 11 verfügt dann über eine maximale Größe, indem das die Sitzfläche 11 bildende Vorderteil 21 und das Hinterteil 22 sich nur noch wenig überlappen.

Das Verstellen der Fußstütze 20 mit dem dieser zugeordneten Vorderteil 21 der Sitzfläche 11 erfolgt dadurch, daß zunächst die Arretierung zwischen dem Vorderteil 21 und dem Hinterteil 22 gelöst wird und bei arretierter, also unverkippbarer Rückenlehne 12 die Führungsstangen 18 mit der Fußstütze 20 in den Sockelteilen 15 verschoben werden. Dabei bleibt die Position der Kipplager 23 gegenüber den Sockelteilen 15 unverändert (vgl. Fig. 4 und 5), wodurch sich auch die Position des Hinterteils 22 der Sitzfläche 11 nicht ändert. Beim Verstellen der Fußstütze 20 werden also nur die Führungsstangen 18 und das Vorderteil 21 der Sitzfläche 11 gegenüber dem stillstehenden Hinterteil 22, den Sockelteilen 15 und den Kipplagern 23 in ihrer Relativposition verändert. Nach dem Einstellen der Position der Fußstütze 20 des Vorderteils 21 der Sitzfläche 11 wird wieder das Vorderteil 21 gegenüber dem Hinterteil 22 der Sitzfläche 11 arretiert, wodurch auch die Kipplager 23 längs der Führungsstangen 18 unverschieblich arretiert sind.

Die Fig. 6 und 7 zeigen unterschiedliche Positionen der Rückenlehne 12 bei gleicher Position der Fußstütze 20 zum Sitz und gleich großer Sitzfläche 11 und gleicher Sitztiefe.

In der Fig. 6 ist die Rückenlehne 12 vollständig zurückgeklappt, wodurch die Person auf dem Sitz 10 in eine Liegestellung gelangt. Zum Zurückklappen der Rückenlehne 12 werden zunächst die Arretierungsschrauben 34 in den Bereichen der Drehpunkte 25 zwischen der Rückenlehne 12 und den Kipplagern 23 an gegenüberliegenden Seiten des Hinterteils 22 der Sitzfläche 11 gelöst. Dadurch kann die Rückenlehne 12 zurückgeschwenkt werden in die in der Fig. 6 gezeigte, etwa horizontale Stellung. Bei dieser Verschwenkung der Rückenlehne 12 wird durch die Koppelstangen 33 der Abstand zwischen der Anlenkung derselben an den Sockelteilen 15 einerseits und den Rahmen 29 der Rückenlehne 12 andererseits konstant gehalten. Die Folge ist, daß durch die Verbindung des Vorderteils 21 mit dem Hinterteil 22 der Sitzfläche 11 und die Befestigung des Vorderteils 21 mittels der Quertraverse 19 an den Führungsstangen 18 die Führungsstangen 18 zusammen mit den Kipplagern 23 gegenüber den Sockelteilen 15 verschoben werden, und zwar derart, daß die die Fußstütze 15 tragenden Enden der Führungsstangen 18 nach vorn aus den Sockelteilen 15 weiter herausgeschoben werden. Durch die heruntergeschwenkte Rückenlehne 12 wird die Sitzfläche 11 in Richtung zur Fußstütze 20 nach vorn geschoben. Diese Verschiebung des in eine Liegefläche verwandelten Sitzes 10 führt dazu, daß der beim Einnehmen einer Liegeposition zurückverschobene Schwerpunkt der im Sitz 10 liegenden Person so verändert wird, daß der Schwerpunkt der liegenden Person in horizontaler Richtung etwa dem Schwerpunkt der sitzenden Person entspricht. Die Schwerpunktverlagerung durch die Veränderung der Sitzposition in die Liegeposition wird somit in horizontaler Richtung im wesentlichen kompensiert, wodurch die Gefahr des Umkippens des mit dem Sitz 10 z.B. versehenen Schiebewagens beim Verschwenken der Rückenlehne 12 ausgeglichen wird.

Die Fig. 7 zeigt den zusammengeklappten Sitz 10, bei dem die Rückenlehne 12 von oben gegen die Sitzfläche 11 geklappt ist. Hierbei wird wiederum durch die Koppelstangen 33 der Abstand ihrer Anlenkungspunkte an die Seitenteile 30 des Rahmens 29 der Rückenlehne 12 einerseits und die Sockelteile 15 andererseits konstant gehalten. Dadurch erfolgt wiederum eine Verschiebung der Sitzfläche 11 mit den Kipplagern 23 und den Führungsstangen 18 gegenüber den Sockelteilen 15. Diese Verschiebung erfolgt beim Anklappen der Rückenlehne 12 an die Sitzfläche 11 in entgegengesetzten Richtungen, und zwar zunächst nach vorn in Richtung zur Fußstütze 20 und anschließend zurück. Erreicht wird dieses dadurch, daß die Koppelstangen 33 über die Drehgelenke 24 hinweggeschwenkt werden und dabei die durch die Drehpunkte 25 verlaufende (gedachte) Schwenkachse 13 schneiden. Die Koppelstangen 23 werden dabei über einen Totpunkt der Schwenkachse 13 hinwegbewegt, was die besagte gegensätzliche Verschiebung der Führungsstangen 18 mit dem Sitz 10 gegenüber den Sockelteilen 15 zur Folge hat, wodurch der Verschiebeweg der Führungsstangen 18 gegenüber den Sockelteilen 15 verringert werden kann. Daraus resultieren kürzere Führungsstangen 18 und eine insgesamt kompakte Bauweise des Sitzes 10, und zwar insbesondere seines Unterbaus 14.

### Bezugszeichenliste:

- 10: Sitz
- 11: Sitzfläche
- 12: Rückenlehne
- 13: Schwenkachse
- 14: Unterbau
- 15: Sockelteil
- 16: Querholm
- 17: Rastklaue
- 18: Führungsstange
- 19: Quertraverse
- 20: Fußstütze
- 21: Vorderteil
- 22: Hinterteil
- 23: Kipplager
- 24: Drehgelenk
- 25: Drehpunkt
- 26: Nut
- 27: Führungssteg
- 28: Längsschlitz
- 29: Rahmen
- 30: Seitenteil
- 31: Querrohr
- 32: Querrohr
- 33: Koppelstange
- 34: Arretierungsschraube
- 35: Fahrgestell
- 36: Rastmaul

## Patentansprüche

1. Sitz für einen Schiebewagen, Stuhl oder dergleichen für insbesondere Kinder und/oder Behinderte, mit einer Sitzfläche (11), der Sitzfläche (11) zugeordnete Führungsbahnen sowie einer verschwenkbaren Rückenlehne (12), die mit der Sitzfläche (11) über mindestens einem Teil der Sitzfläche (11) zugeordnete Kipplager (23) verbunden ist, wobei der Rückenlehne (12) mindestens ein Koppelglied (33) zugeordnet ist, durch das mit dem Verschwenken der Rückenlehne (12) mindestens ein Teil der Sitzfläche (11) verschiebbar ist, **dadurch gekennzeichnet, dass** an den Führungsbahnen die Kipplager (23) und außerdem Sockelteile (15) gelagert sind, und dass die Rückenlehne (12) über mindestens ein Koppelglied (33) mit wenigstens einem der Sockelteile (15) verbunden ist, wobei die Führungsbahnen und die Sockelteile (15) beim Verschwenken der Rückenlehne (12) relativ zueinander verschiebbar sind.

2. Sitz nach einem der vorhergehenden Ansprüche, **dadurch gekennzeichnet, dass** mindestens einem Teil der Sitzfläche (11) vorzugsweise zwei Kipplager (23) fest zugeordnet sind, und vorzugsweise an den Kipplagern (23) die Rückenlehne (12) verschwenkbar gelagert ist.

3. Sitz nach einem der vorhergehenden Ansprüche, **dadurch gekennzeichnet, dass** die Führungsorgane als Führungsbahnen und insbesondere längs derselben verschiebbar geführte Sockelteile (15) ausgebildet sind, wobei vorzugsweise mindestens ein Teil der Sitzfläche (11) mit den Kipplagern (23) gegenüber den Führungsbahnen und/oder den Sockelteilen (15) verschieblich ist.

4. Sitz nach einem der vorhergehenden Ansprüche, **dadurch gekennzeichnet, dass** die Kipplager (23) gegenüber den Sockelteilen (15) verschiebbar sind, vorzugsweise in Längsrichtung der Führungsbahnen und insbesondere zusammen mit denselben.

5. Sitz nach einem der vorhergehenden Ansprüche, **dadurch gekennzeichnet, dass** er zusammen mit den Kipplagern (23) und den Führungsbahnen sowie den Sockelteilen (15) vorzugsweise lösbar mit einem Traggestell verbindbar ist.

6. Sitz nach einem der vorhergehenden Ansprüche, **dadurch gekennzeichnet, dass** er durch Kupplungsmittel, insbesondere Rastklauen (17), lösbar an das Traggestell ankuppelbar ist, wobei vorzugsweise die Kupplungsmittel, insbesondere Rastklauen (17), an den Sockelteilen (15) angeordnet sind.

7. Sitz nach einem der vorhergehenden Ansprüche, **dadurch gekennzeichnet, dass** das oder jedes Koppelglied als Koppelstange 33 derart an die Rückenlehne (12) und das jeweilige Sockelteil (15) angelenkt ist, dass beim Verschwenken der Rückenlehne (12) die Kipplager (23) und die Führungsbahnen mit der Rückenlehne (12) und der Sitzfläche (11) längs zu den Sockelteilen (15) verschiebbar sind.

8. Sitz nach einem der vorhergehenden Ansprüche, **dadurch gekennzeichnet, dass** das oder jedes Koppelglied als Koppelstange 33 derart an die Rückenlehne (12) und das oder jedes Sockelteil (15) angelenkt ist, dass beim Zusammenklappen des Sitzes (10) das oder jedes Koppelglied als Koppelstange 33 eine die Drehpunkte (25) zwischen der Rückenlehne (12) und den Kipplagern (23) verbindende, gedachte Schwenkachse (13) schneidet.

9. Sitz nach einem der vorhergehenden Ansprüche, **dadurch gekennzeichnet, dass** die Führungsbahnen mit einer Fußstütze (20) verbunden sind, deren Abstand zur Rückenlehne (12) vorzugsweise veränderlich ist, insbesondere durch Verschieben mindestens gegenüber den Sockelteilen (15).

10. Sitz nach einem der vorhergehenden Ansprüche, **dadurch gekennzeichnet, dass** die Sitzfläche (11) mehrteilig ausgebildet ist, vorzugsweise aus einem Vorderteil (21) und einem Hinterteil (22) gebildet ist, wobei insbesondere das Hinterteil (22) der Sitzfläche (11) fest mit den Kipplagern (23) verbunden ist, während das Vorderteil (21) fest mit den Führungsbahnen in Verbindung steht.

11. Sitz nach einem der vorhergehenden Ansprüche, **dadurch gekennzeichnet, dass** in Längsrichtung der Führungsbahnen gesehen das Vorderteil (21) gegenüber dem Hinterteil (22) der Sitzfläche (11) verschiebbar ist, und vorzugsweise das Vorderteil (21) und das Hinterteil (22) der Sitzfläche (11) zueinander unverschieblich arretierbar sind.

12. Sitz nach einem der vorhergehenden Ansprüche, **dadurch gekennzeichnet, dass** die Führungsbahnen als Führungsstangen (18) oder als in einer Richtung flexible bzw. biegsame und in der anderen Richtung starre Ketten bzw. Profile ausgebildet sind.

## Claims

1. Seat for a wheeled carriage, chair or the like, particularly for children and/or disabled people, having a seat surface (11), guiding paths which are assigned to the seat surface (11) and a pivotable backrest (12) which is connected to the seat surface (11) via tilting bearings (23) assigned to at least one part of the seat surface (11), the backrest (12) being assigned at least one coupling element (33), by means of which at least one part of the seat surface (11) can be displaced with the pivoting of the backrest (12), **characterized in that** the tilting bearings (23) and, in addition, the base parts (15) are mounted on the guiding paths, and **in that** the backrest (12) is connected via at least one coupling element (33) to at least one of the base parts (15), it being possible for the guiding paths and the base parts (15) to be displaced relative to each other when the backrest (12) is pivoted.

2. Seat according to Claim 1, **characterized in that** preferably two tilting bearings (23) are assigned in a fixed manner to at least one part of the seat surface (11), and the backrest (12) is mounted pivotably preferably on the tilting bearings (23).

3. Seat according to one of the preceding claims, **characterized in that** the guiding members are designed as guiding paths and base parts (15) which are guided displaceably in particular along the same, in which case preferably at least one part of the seat surface (11) having the tilting bearings (23) is displaceable with respect to the guiding paths and/or the base parts (15).

4. Seat according to one of the preceding claims, **characterized in that** the tilting bearings (23) can be displaced with respect to the base parts (15), preferably in the longitudinal direction of the guiding paths and, in particular, together with the same.

5. Seat according to one of the preceding claims, **characterized in that** it can be connected together with the tilting bearings (23) and the guiding paths and the base parts (15) to a supporting frame preferably in a releasable manner.

6. Seat according to one of the preceding claims, **characterized in that** it can be coupled releasably to the supporting frame by coupling means, in particular latching claws (17), the coupling means, in particular latching claws (17), preferably being arranged on the base parts (15).

7. Seat according to one of the preceding claims, **characterized in that** the or each coupling element in the form of a coupling rod (33) is coupled to the backrest (12) and to the particular base part (15) in such a manner that, when the backrest (12) is pivoted, the tilting bearings (23) and the guiding paths can be displaced together with the backrest (12) and the seat surface (11) longitudinally with respect to the base parts (15).

8. Seat according to one of the preceding claims, **characterized in that** the or each coupling element in the form of a coupling rod (33) is coupled to the backrest (12) and to the or each base part (15) in such a manner that, when the seat (10) is folded up, the or each coupling element in the form of a coupling rod (33) intersects an imaginary pivot axis (13) connecting the swivel points (25) between the backrest (12) and the tilting bearings (23).

9. Seat according to one of the preceding claims, **characterized in that** the guiding paths are connected to a footrest (20) whose distance from the backrest (12) can preferably be changed, in particular by displacing it at least with respect to the base parts (15).

10. Seat according to one of the preceding claims, **characterized in that** the seat surface (11) is of multi-part design, and is preferably formed from a front part (21) and a rear part (22), in which case, in particular, the rear part (22) of the seat surface (11) is connected in a fixed manner to the tilting bearings (23) while the front part (21) is connected in a fixed manner to the guiding paths.

11. Seat according to one of the preceding claims, **characterized in that** the front part (21), as seen in the longitudinal direction of the guiding paths, can be displaced with respect to the rear part (22) of the seat surface (11), and the front part (21) and the rear part (22) of the seat surface (11) can preferably be locked in a manner such that they are non-displaceable with respect to each other.

12. Seat according to one of the preceding claims, **characterized in that** the guiding paths are designed as guiding rods (18) or as chains or profiles which are flexible or pliable in one direction and are rigid in the other direction.

## Revendications

1. Siège tel que fauteuil roulant, chaise ou siège semblable en particulier pour enfants et/ou handicapés, comprenant une surface d'assise (11), des glissières associées à cette surface (11) et un dossier inclinable (12) qui est joint à la surface d'assise (11) par des paliers de basculement (23) associés à au moins une partie de la surface d'assise (11), au dossier (12) étant associé au moins un élément d'accouplement (33) qui permet de déplacer, avec le basculement du dossier (12), au moins une partie de la surface d'assise (11), **caractérisé par le fait que** les paliers de basculement (23) et en outre des éléments de socle (15) sont montés sur les glissières, et que le dossier (12) est joint par au moins un élément d'accouplement (33) à au moins un des éléments de socle (15), les glissières étant mobiles par rapport aux éléments de socle (15) lors du basculement du dossier (12).

2. Siège selon la revendication 1, **caractérisé par le fait qu'**à au moins une partie de la surface d'assise (11) sont associés de manière fixe au moins deux paliers de basculement (23), et de préférence, le dossier (12) est monté basculant sur les paliers de basculement (23).

3. Siège selon l'une des revendications précédentes, **caractérisé par le fait que** les organes de guidage sont formés de glissières et en particulier d'éléments de socle (15) mobiles le long de celles-ci, et de préférence, au moins une partie de la surface d'assise (11) est mobile avec les paliers de basculement (23) par rapport aux glissières et/ou aux éléments de socle (15).

4. Siège selon l'une des revendications précédentes, **caractérisé par le fait que** les paliers de basculement (23) sont mobiles par rapport aux éléments de socle (15), de préférence dans la direction longitudinale des glissières et en particulier conjointement avec celles-ci.

5. Siège selon l'une des revendications précédentes, **caractérisé par le fait qu'**il peut, conjointement avec les paliers de basculement (23), les glissières et les éléments de socle (15), être joint de préférence de manière séparable à un bâti.

6. Siège selon l'une des revendications précédentes, **caractérisé par le fait qu'**il peut être accouplé de manière séparable au bâti par des moyens d'accouplement, en particulier des griffes d'encliquetage (17), et de préférence, les moyens d'accouplement, en particulier des griffes d'encliquetage (17), sont situés sur les éléments de socle (15).

7. Siège selon l'une des revendications précédentes, **caractérisé par le fait que** le ou chaque élément d'accouplement, constitué d'une tige d'accouplement (33), s'articule sur le dossier (12) et sur l'élément de socle (15) associé de façon telle que lors du basculement du dossier (12), les paliers de basculement (23) et les glissières soient mobiles avec le dossier (12) et la surface d'assise (11) dans la direction longitudinale des éléments de socle (15).

8. Siège selon l'une des revendications précédentes, **caractérisé par le fait que** le ou chaque élément d'accouplement, constitué d'une tige d'accouplement (33), s'articule sur le dossier (12) et sur le ou chaque élément de socle (15) de façon telle que lors du rabattement du siège (10), le ou chaque élément d'accouplement, constitué d'une tige d'accouplement (33), coupe un axe géométrique de basculement (13) qui relie les axes de rotation (25) entre le dossier (12) et les paliers de basculement (23).

9. Siège selon l'une des revendications précédentes, **caractérisé par le fait que** les glissières sont jointes à un repose-pieds (20) dont la distance au dossier (12) est de préférence réglable, en particulier par déplacement au moins par rapport aux éléments de socle (15).

10. Siège selon l'une des revendications précédentes, **caractérisé par le fait que** la surface d'assise (11) est formée de plusieurs parties, de préférence d'une partie avant (21) et d'une partie arrière (22), et en particulier, la partie arrière (22) de la surface d'assise (11) est jointe de manière fixe aux paliers de basculement (23), tandis que la partie avant (21) est reliée de manière fixe aux glissières.

11. Siège selon l'une des revendications précédentes, **caractérisé par le fait que** vue dans la direction longitudinale des glissières, la partie avant (21) de la surface d'assise (11) est mobile par rapport à la partie arrière (22), et de préférence, la partie avant (21) et la partie arrière (22) de la surface d'assise (11) peuvent être immobilisées l'une par rapport à l'autre.

12. Siège selon l'une des revendications précédentes, **caractérisé par le fait que** les glissières sont formées de tiges de guidage (18) ou de chaînes ou de profilés flexibles ou souples dans une direction et rigides dans l'autre direction.
